# FASCICULE DE BREVET EUROPEEN

(11) **EP 3 976 474 B1**
(45) Date de publication et mention de la délivrance du brevet: **26.02.2025**
(21) Numéro de dépôt: 20743189.1
(22) Date de dépôt: 27.05.2020
(51) Int. Cl.: B64D 27/02, B64D 27/24, B64D 35/08

(54) **ENGIN COMPRENANT UN GROUPE MOTOPROPULSEUR HYBRIDE ET PROCÉDÉ DE PILOTAGE CORRESPONDANT**
MOTOR MIT HYBRIDER ANTRIEBSEINHEIT UND ENTSPRECHENDEM KONTROLLVERFAHREN
ENGINE INCLUDING A HYBRID POWERTRAIN UNIT AND CORRESPONDING CONTROL PROCESS

(30) Priorité: 29.05.2019 FR 1905703
(43) Date de publication de la demande: 06.04.2022
(73) Titulaire: Voltaero, 17600 Medis (FR)
(72) Inventeur: BOTTI, Jean, FORT LAUDERDALE, Florida 33308 (US); ESTEYNE, Didier, 17600 SAUTRON (FR)
(74) Mandataire: Ipsilon
(86) Numéro de dépôt international: PCT/FR2020/050892
(87) Numéro de publication internationale: WO 2020/240134

(56) Documents cités:
- DE-A1- 102010 021 026
- FR-A1- 3 039 614
- US-A- 2 462 825
- US-A1- 2009 145 998
- US-A1- 2012 025 032
- US-A1- 2014 203 739
- US-A1- 2014 283 519
- US-A1- 2016 083 104
- ANONYMOUS: "Coaxial rotors - Wikipedia", 3 June 2017 (2017-06-03), en.wikipedia.org, XP055647537, Retrieved from the Internet <URL:https://en.wikipedia.org/w/index.php?title=Coaxial_rotors&oldid=783681140> [retrieved on 20191128]

## Description

### DOMAINE DE L'INVENTION

La présente invention concerne de manière générale un engin, tel qu'un aéronef, équipé d'un groupe motopropulseur comprenant une motorisation thermique et une motorisation électrique.

### ART ANTERIEUR

On connait de l'état de la technique des engins tels que des aéronefs qui comprennent un groupe motopropulseur avec la configuration suivante. Le groupe motopropulseur comprend un système de propulsion à pales, une motorisation électrique, une batterie permettant d'alimenter la motorisation électrique, et un moteur thermique associé à un alternateur permettant de recharger la batterie.

Cependant, en cas de défaut du moteur thermique, la puissance électrique restante peut se révéler insuffisante pour assurer un pilotage sécurisé de l'aéronef.

Le document US2016083104 A1 décrit un aéronef comprenant une motorisation thermique et une motorisation électrique agencée en parallèle de la motorisation thermique pour apporter un ajout de puissance pour l'entrainement d'un rotor de l'aéronef en plus de la puissance fournie par la motorisation thermique.

Le document FR3039614A1 décrit une installation motrice hybride pour un aéronef à voilure tournante comportant deux turbomoteurs et au moins une machine électrique. Le document US2014283519A1 traite d'un aéronef hybride composé de deux moteurs à combustion couplés à un rotor via un boîtier de transmission et d'une machine électrique qui est également couplée au rotor via le boîtier de transmission. Le document US2012025032A1 décrit un hélicoptère comprenant un système de propulsion d'un rotor associé à un moteur principal et une machine électrique. Le document US2009145998A1 décrit un hélicoptère qui comprend un moteur à turbine à gaz couplé mécaniquement à un moteur électrique, associé à un bloc-batterie, pour entraîner un rotor.

La présente invention a pour but de proposer un nouvel engin permettant de pallier tout ou partie des problèmes exposés ci-dessus.

### RESUME DE L'INVENTION

A cet effet, l'invention a pour objet un engin, tel qu'un aéronef, muni d'un groupe motopropulseur, selon la revendication 1.

Une telle configuration de groupe motopropulseur hybride qui comprend deux moteurs thermiques débrayables l'un par rapport à l'autres permet d'assurer un pilotage sécurisé de l'aéronef lorsque l'un des moteurs thermiques est défectueux. Une telle configuration est particulièrement utile lorsque l'engin est un hélicoptère.

Le système de propulsion à hélice de l'engin peut ainsi être entrainé de façon indépendante ou simultanée, par la motorisation électrique et/ou par la motorisation thermique dont une partie ou la totalité peut être utilisée.

La sécurité, notamment au décollage lorsque l'engin est un aéronef, est ainsi améliorée puisque, en cas de problème sur la chaine de transmission électrique, la motorisation thermique peut prendre le relais pour entraîner l'hélice avec l'un ou la combinaison des deux moteurs thermiques.

Par ailleurs, la possibilité d'utiliser un mode de propulsion électrique seul, permet à un aéronef de décoller et d'atterrir sur des terrains urbains, ou périurbains avec une production sonore réduite.

Le fait de pouvoir débrayer l'un des moteurs thermiques, tout en conservant l'autre embrayé, permet également de pallier un défaut de moteur ou, par exemple dans une configuration de croisière, de réduire la consommation d'énergie.

Selon des modes de réalisations, l'engin permet d'obtenir tout ou partie des avantages suivants :
- un faible bruit à l'atterrissage et au décollage,
- une grande sécurité en opérations du fait des redondances de motorisation disponibles et des possibilités d'adaptation de configuration de motorisation,
- une optimisation possible de la consommation d'énergie,
- une réduction des émissions de CO2 dans les phases de décollage et d'atterrissage,
- une possibilité de réduire la maintenance d'un tel groupe motopropulseur par rapport à l'usage d'une turbine.

L'engin peut aussi comporter une ou plusieurs des caractéristiques suivantes prises dans toute combinaison techniquement admissible.

Selon une caractéristique avantageuse de l'invention, ledit engin comprend une unité de pilotage du système d'embrayage de la motorisation thermique et du système d'alimentation de la motorisation électrique, l'unité de pilotage étant configurée pour permettre d'embrayer les deux moteurs thermiques pour transmettre le mouvement de rotation de la motorisation thermique au système de propulsion à pales par l'intermédiaire de la motorisation électrique, sans consommation ou recharge de la batterie électrique.

Selon une caractéristique avantageuse de l'invention, le système de propulsion à pales comprend deux rotors à pales qui comprennent chacun un arbre rotatif vertical muni de pales, lesdits rotors étant configurés pour, à l'état entrainé en rotation, tourner en sens opposé l'un de l'autre.

Selon une caractéristique avantageuse de l'invention, l'engin comprenant un arbre de sortie de la motorisation thermique, le système d'embrayage de la motorisation thermique est interposé entre les arbres de sortie des moteurs thermiques et un système de transmission de mouvement configuré pour transmettre le mouvement de rotation d'un ou de chacun desdits moteurs thermique audit arbre de sortie de la motorisation thermique.

Selon une caractéristique avantageuse de l'invention, le groupe motopropulseur comprend un système de réduction de vitesse, de préférence comprenant un train d'engrenages, situé entre l'arbre de sortie de la motorisation thermique et l'entrée de la motorisation électrique.

Selon une caractéristique avantageuse de l'invention, l'engin comprenant un arbre de sortie de la motorisation électrique, le groupe motopropulseur comprend un système de transmission disposé en sortie de la motorisation électrique et configuré pour transmettre le mouvement de rotation de la motorisation électrique audit arbre de sortie de la motorisation électrique.

Selon une caractéristique avantageuse de l'invention, l'engin comprenant un arbre de sortie de la motorisation électrique et un arbre d'entrée du système de propulsion à pales, le groupe motopropulseur comprend un système de réduction de vitesse, de préférence un train épicycloïdal, entre ledit arbre de sortie de la motorisation électrique et ledit arbre d'entrée du système de propulsion à pales.

Selon une caractéristique avantageuse de l'invention, l'arbre d'entrée du système de propulsion à pales est muni d'un dispositif de réduction conique.

Selon une caractéristique avantageuse de l'invention, la motorisation électrique présente plusieurs, de préférence trois, moteurs électriques, répartis de préférence régulièrement autour d'un axe central.

Selon une caractéristique avantageuse de l'invention, chaque moteur électrique comprend un système de débrayage, par exemple par décrabotage, permettant, par exemple en cas de panne dudit moteur électrique, d'isoler mécaniquement ledit moteur électrique vis-à-vis du ou des autres moteurs électriques.

Selon une caractéristique avantageuse de l'invention, la puissance de chaque moteur thermique est de l'ordre de 150 kW, et la puissance de la motorisation électrique est de l'ordre de 180 kW, avec de préférence 60 kW par moteur électrique de la motorisation électrique.

Selon une caractéristique avantageuse de l'invention, l'engin comprend une unité de pilotage du système d'embrayage de la motorisation thermique et du système d'alimentation de la motorisation électrique, l'unité de pilotage étant configurée pour permettre d'embrayer les deux moteurs thermiques et d'alimenter la motorisation électrique pour entraîner le système de propulsion à pales à l'aide de la combinaison des deux moteurs thermiques et de la motorisation électrique.

Selon une caractéristique avantageuse de l'invention, l'engin comprend une unité de pilotage du système d'embrayage de la motorisation thermique et du système d'alimentation de la motorisation électrique, l'unité de pilotage étant configurée pour permettre d'embrayer les deux moteurs thermiques pour entraîner la motorisation électrique, de manière à, d'une part, transmettre, par l'intermédiaire de la motorisation électrique, le mouvement de rotation de la motorisation thermique au système de propulsion à pales, tout en rechargeant la batterie du système d'alimentation électrique.

Selon un aspect particulier, les différents modes de fonctionnement permis par l'unité de pilotage présentés ci-avant, sont sélectionnables les uns par rapport aux autres.

Selon une caractéristique avantageuse de l'invention, l'engin comprend un carter dans lequel est logée la motorisation électrique et dans lequel sont ménagées des ouvertures et/ou cavités permettant de refroidir la motorisation électrique, ledit groupe motopropulseur comprenant de préférence un système de refroidissement à eau pour le refroidissement des moteurs thermiques.

L'invention concerne également un procédé de pilotage d'un engin tel que décrit ci-dessus qui comprend le débrayage ou l'embrayage de l'un ou chacun des moteurs thermiques par rapport au système de propulsion à pales, et/ou le pilotage du système d'alimentation de la motorisation électrique pour alimenter la motorisation électrique ou recharger la batterie.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- [Fig. 1] la figure 1 est une vue schématique d'un aéronef, ici un hélicoptère, conformément à un mode de réalisation de l'invention ;
- [Fig. 2] la figure 2 est une vue schématique d'un groupe motopropulseur d'un aéronef, tel que celui de la figure 1, conformément à un mode de réalisation de l'invention ;
- [Fig. 3] la figure 3 est une vue schématique d'un groupe motopropulseur conformément à un mode de réalisation de l'invention, par exemple en mode de décollage et/ou de montée, combinant une propulsion thermique et une propulsion électrique ;
- [Fig. 4] la figure 4 est une vue schématique d'un groupe motopropulseur d'un aéronef conformément à un mode de réalisation de l'invention, en mode de propulsion thermique et de recharge de la batterie électrique ;
- [Fig. 5] la figure 5 est une vue schématique d'un groupe motopropulseur d'un aéronef conformément à un mode de réalisation de l'invention, en mode de propulsion électrique seule ;
- [Fig. 6] la figure 6 est une vue schématique d'un groupe motopropulseur d'un aéronef conformément à un mode de réalisation de l'invention, en mode de propulsion thermique seule ;
- [Fig. 7] la figure 7 est une vue schématique d'un aéronef conformément à un mode de réalisation de l'invention, au cours de son vol, par exemple en palier et/ou par exemple en cas de défaut d'un des moteurs thermiques.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. Les modes de réalisation qui suivent sont examinés, par souci de simplification, en relation avec la terminologie et la structure d'un aéronef. Comme expliqué ci-après, l'engin peut aussi être un engin nautique.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

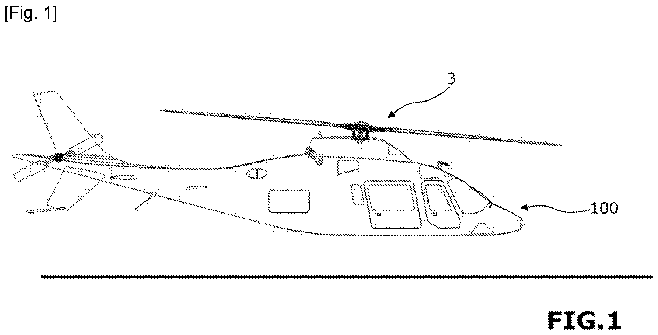

A la figure 1, on a illustré un engin qui est un hélicoptère 100 muni d'un groupe motopropulseur.

En variante, l'engin peut être un aéronef d'un autre type, tel qu'un avion ou un drone. L'engin peut aussi être un engin nautique.

Le groupe motopropulseur de l'hélicoptère comprend un système de propulsion 3 à pales qui inclut deux rotors 31, 32 contrarotatifs. En variante, il peut être prévu un seul rotor.

L'hélicoptère peut comprendre aussi un rotor anti-couple ou autre dispositif anti-couple qui peut être entrainé par ledit groupe motopropulseur ou par une motorisation indépendante. Le dispositif anti-couple n'est pas nécessaire lorsque l'engin comprend deux rotors contrarotatifs.

La description qui suit est réalisée pour un hélicoptère mais s'applique à d'autres types d'engins muni de système de propulsion à pales. On comprend en particulier que selon le type d'engin, le système de propulsion à pales de l'engin peut comprendre une ou des hélices pour un avion ou un bateau.

En outre la description est aussi applicable à des engins tels que décrits dans la demande de brevet français déposée sous le numéro FR 18 01092, non encore publiée à la date de dépôt de la présente demande, en remplaçant le moteur thermique décrit dans cette demande FR 18 01092 par un ensemble de deux moteurs thermiques débrayables l'un par rapport à l'autre comme expliqué ci-après.

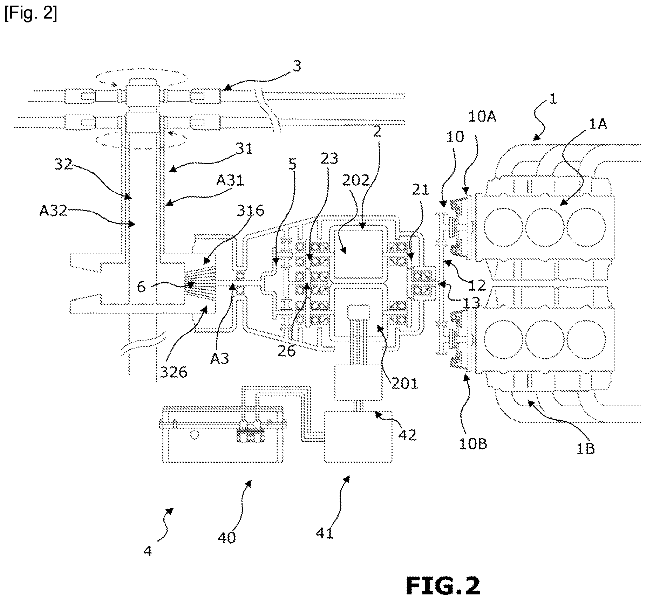

Comme illustré à la figure 2, le groupe motopropulseur comprend une motorisation thermique 1 configurée pour permettre d'entrainer le système de propulsion 3 à pales comme détaillé ci-après.

### Motorisation thermique

La motorisation thermique 1 inclut un premier moteur thermique 1A et un deuxième moteur thermique 1B. Chacun des premier et deuxième moteurs thermiques comprend un arbre de sortie.

La puissance de chaque moteur thermique 1A, 1B est par exemple de 150 kW.

Ledit groupe motopropulseur comprend de préférence un système de refroidissement à eau pour le refroidissement des moteurs thermiques 1A, 1B.

### Système d'embrayage

Le groupe motopropulseur comprend un système d'embrayage 10 qui permet d'embrayer l'un quelconque ou chacun des moteurs thermiques 1A, 1B pour entrainer le système de propulsion 3 à pales.

Le système d'embrayage 10 comprend un embrayage 10A et un embrayage 10B commandable sélectivement pour permettre d'embrayer le premier moteur thermique 1A, et/ou d'embrayer le deuxième moteur thermique 1B par rapport à la chaine de transmission de mouvement entre la motorisation thermique 1 et le système de propulsion à pales 3.

Le système d'embrayage 10 est aussi configuré pour permettre de débrayer l'un quelconque ou chacun des moteurs thermiques 1A, 1B par rapport au système de propulsion 3 à pales.

On entend par "débrayer par rapport au système de propulsion 3 à pales", le fait que la motorisation thermique 1 est découplée de la chaine de transmission d'effort ou de mouvement qui s'étend entre la motorisation thermique 1 et le système de propulsion 3 à pales.

Le système d'embrayage 10 de la motorisation thermique 1 est interposé entre les arbres de sortie des moteurs thermiques 1A, 1B et un système de transmission 12 de mouvement.

Le système de transmission 12 de mouvement est configuré pour transmettre le mouvement de rotation d'un ou de chacun desdits moteurs thermiques à un arbre 13, appelé arbre de sortie de la motorisation thermique 1.

Le système 12 comprend par exemple un ensemble d'engrenages, ou encore un ensemble de roue et de courroie ou de chaîne.

L'arbre de sortie 13 est couplé ou couplable au système de propulsion 3 à pales par l'intermédiaire d'un mécanisme de transmission de mouvement présenté ci-après.

### Mécanisme de transmission

Le mécanisme de transmission comprend un système de réduction de vitesse qui comprend un train d'engrenages 21 situé entre l'arbre de sortie 13 de la motorisation thermique 1 et l'entrée de la motorisation électrique 2.

Le train d'engrenages comporte un arbre d'entrée 13 et des satellites portés par les arbres d'entrée de la motorisation électrique 2.

Le mécanisme de transmission comprend aussi un système de transmission 23 disposé en sortie de la motorisation électrique 2 et configuré pour transmettre le mouvement de rotation de la motorisation électrique 2 (qui comprend plusieurs moteurs électriques dans l'exemple illustré aux figures) à un arbre, appelé arbre de sortie 26 de la motorisation électrique.

L'arbre de sortie 26 est de préférence coaxial avec l'arbre de sortie 13.

Le système de transmission 23 forme une réduction (par exemple d'un rapport égal à environ 1.4) qui, avec l'arbre de sortie 26, permet d'attaquer un système de réduction 5 de vitesse.

Le système de réduction 5 de vitesse comprend un train épicycloïdal 5 dont le rapport de réduction est par exemple égal à environ 3.

Le train épicycloïdal 5 est situé entre l'arbre de sortie 26 de la motorisation électrique 2 et un arbre d'entrée A3 du système de propulsion 3 à pales.

### Motorisation électrique

Le groupe motopropulseur comprend aussi une motorisation électrique 2 configurée pour permettre d'entrainer le système de propulsion 3 à pales.

Un système d'alimentation 4 électrique comprend une batterie 40 permettant d'alimenter la motorisation électrique 2. Bien entendu, la batterie 40 peut comprend un ensemble de batteries.

Le système d'alimentation 4 électrique comporte aussi un système de gestion électrique 41, 42 qui comprend un boîtier haute-tension 41 et un contrôleur 42.

Le boîtier haute-tension 41 permet d'ouvrir ou de fermer le circuit d'alimentation entre la batterie 40 et la motorisation électrique 2. Le contrôleur 42 permet de traiter le courant fourni par la batterie 40 ou produit par la motorisation électrique 2 lorsqu'elle fonctionne en génératrice.

Dans l'exemple illustré aux figures, la motorisation électrique 2 présente plusieurs moteurs électriques 201, 202, répartis de préférence régulièrement autour d'un axe central. Avantageusement, la motorisation électrique comprend trois moteurs répartis à 120° autour d'un axe imaginaire coaxial à l'axe de sortie 26. Ainsi dans l'exemple illustré aux figures, seuls deux moteurs sont représentés mais un troisième est présent.

La puissance de la motorisation électrique 2 est de 180 kW, avec de préférence 60 kW par moteur électrique 2.

Chaque moteur électrique 201, 202 présente un arbre d'entrée couplé au système de réduction 21 et un arbre de sortie couplé au système de transmission 23 de sortie.

Chaque moteur électrique 201, 202 comprend un système de débrayage permettant, par exemple en cas de panne dudit moteur électrique, d'isoler mécaniquement ledit moteur électrique vis-à-vis du ou des autres moteurs électriques. Le système de débrayage peut être un système de débrayage par décrabotage.

De manière générale, lorsqu'il est fait référence à un système d'embrayage celui-ci peut être du type à friction ou à crabots.

Le groupe motopropulseur comprend un carter dans lequel est logée la motorisation électrique 2. Des ouvertures et/ou des cavités peuvent être ménagées dans le carter pour permettre de refroidir la motorisation électrique 2.

### Système de propulsion

Selon le mode de réalisation illustré aux figures, le système de propulsion 3 à pales comprend deux rotors à pales 31, 32 qui comprennent chacun un arbre A31, A32 rotatif vertical muni de pales. Lesdits rotors 31, 32 sont configurés pour, à l'état entrainé en rotation, tourner en sens opposé l'un de l'autre.

L'arbre d'entrée A3 du système de propulsion 3 à pales est muni d'un dispositif de réduction conique 6. Le dispositif de réduction conique 6 comprend un engrenage conique avec un rapport de réduction qui est par exemple de l'ordre de 3.7.

Dans l'exemple illustré aux figures, chaque arbre A31, A32 de rotor 31, 32 est muni d'une portée conique 316, 326 configurée pour coopérer avec l'engrenage conique 6 porté par l'arbre d'entrée A3 du système de propulsion 3 à pales.

Selon un aspect particulier, le groupe motopropulseur comprend une unité de pilotage permettant de piloter le système d'embrayage 10 de la motorisation thermique 1 et le système d'alimentation 4 de la motorisation électrique 2.

### Exemples de procédés de pilotage

Dans l'exemple illustré aux figures, les embrayages sont représentés par simplification en position ouverte. Pour autant, la description ci-après précise la configuration réelle, ouverte (débrayée) ou fermée (embrayée), de chacun desdits embrayage selon le procédé de pilotage mis en œuvre. Par ailleurs, des flèches ont été ajoutées (distinctes des flèches de référence) pour symboliser la chaine de transmission de mouvement qui est active et le cas échéant le courant électrique délivré ou reçu par le système d'alimentation électrique.

Le groupe motopropulseur présenté ci-avant permet de mettre en œuvre différents procédés de pilotage de l'aéronef en adaptant la configuration des embrayages.

L'unité de pilotage est configurée pour permettre de sélectionner différentes configurations de fonctionnement du groupe motopropulseur selon les opérations à réaliser.

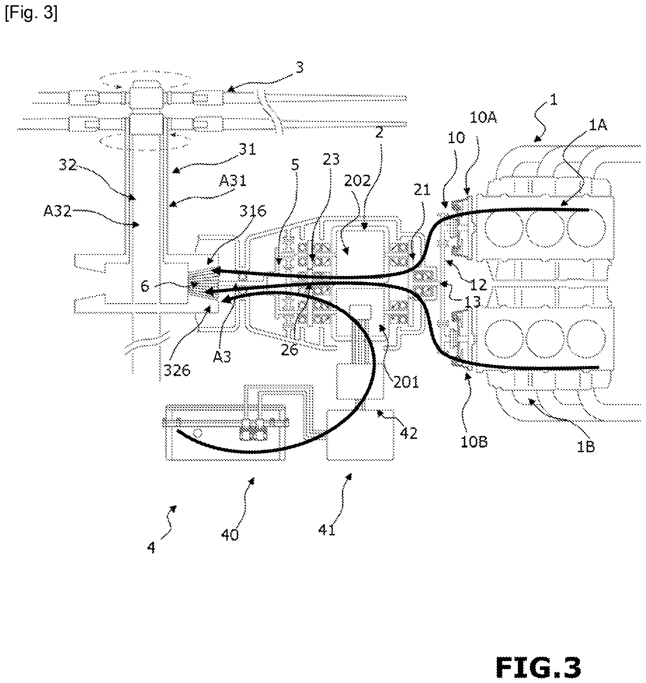

Selon une première configuration de fonctionnement illustrée à la figure 3, l'unité de pilotage commande l'embrayage des deux moteurs thermiques 1A, 1B et d'alimenter la motorisation électrique 2 pour entraîner le système de propulsion 3 à pales à l'aide de la combinaison des deux moteurs thermiques 1A, 1B et de la motorisation électrique 2. Ce mode de fonctionnement illustré à la figure 3 est particulièrement utile en cas de de besoin de forte puissance, notamment au décollage.

Le groupe motopropulseur permet ainsi de combiner le mouvement de rotation fourni par les deux moteurs thermiques et le mouvement de rotation fourni par le moteur électrique pour entraîner le système de propulsion à pales.

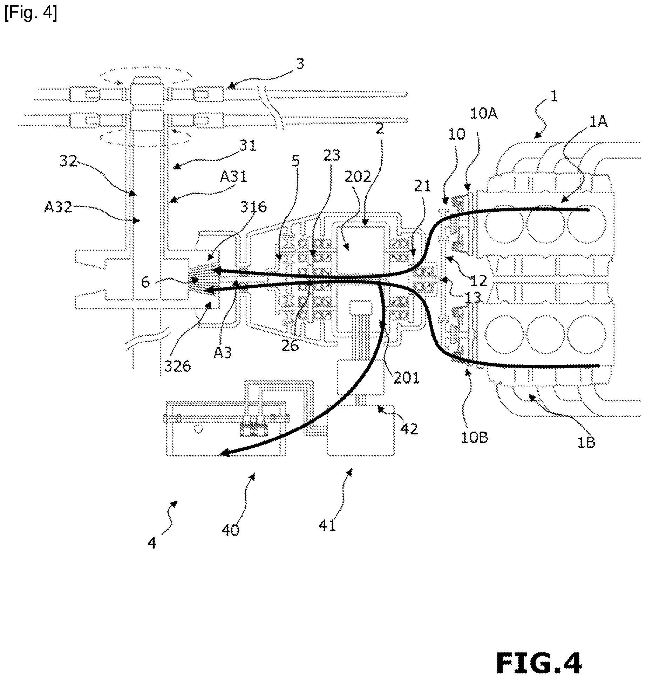

Selon une deuxième configuration de fonctionnement illustrée à la figure 4, l'unité de pilotage commande l'embrayage des deux moteurs thermiques 1A, 1B pour entraîner la motorisation électrique 2, de manière à, d'une part, transmettre, par l'intermédiaire de la motorisation électrique 2, le mouvement de rotation de la motorisation thermique 1 au système de propulsion 3 à pales, tout en pilotant le système d'alimentation 4 pour recharger la batterie 40.

Ce mode de fonctionnement illustré à la figure 4 peut être utilisé lorsque le besoin de puissances pour le système de propulsion 3 est inférieur à celui que peut fournir la motorisation thermique 1 et que la batterie électrique 40 a besoin d'être rechargée.

Un tel mode de fonctionnement du groupe motopropulseur permet d'utiliser le surplus de puissance du moteur thermique 1 pour recharger la batterie 40 en vol, notamment lorsque la batterie a été utilisée pour la propulsion électrique en phase de décollage.

Selon un aspect particulier, la motorisation 2, en particulier les moteurs électriques qui la composent dans l'exemple illustré aux figures, a ou ont une double sortie au niveau de leur rotor, ce qui leur permet d'être moteur et/ou génératrice en fonction des cas de fonctionnement.

Ainsi, en mode croisière, la puissance fournie par les moteurs thermiques 1A, 1B est la source de propulsion principale. Les moteurs électriques se transforment en génératrices et rechargent le pack batterie 40 au travers du convertisseur 42 et de l'électronique de puissance 41.

Avantageusement, la puissance fournie est d'environ 260 kW pour la propulsion par la motorisation thermique et de 30 kW pour la recharge de la batterie.

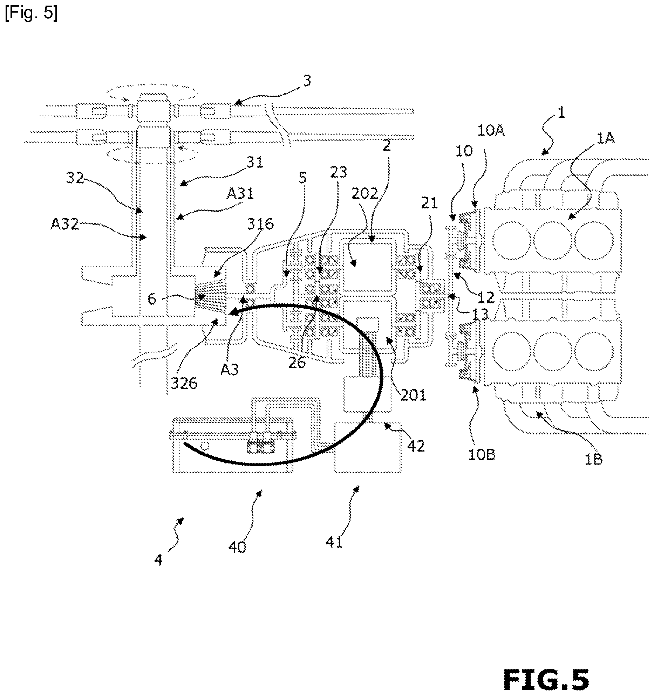

Selon une troisième configuration de fonctionnement illustrée à la figure 5, l'unité de pilotage commande le débrayage des deux moteurs thermiques 1A, 1B et pilote le système d'alimentation 4 pour alimenter la motorisation électrique 2. Ainsi, le système de propulsion 3 à pales est entrainé à l'aide uniquement de la motorisation électrique 2. Ce mode de fonctionnement illustré à la figure 5 est particulièrement utile pour un atterrissage en silence.

Il est ainsi possible en mode atterrissage, d'activer uniquement le mode électrique à l'aide de la batterie 40 et du système de gestion électrique 41, 42 qui fournissent l'énergie électrique à la motorisation électrique 2.

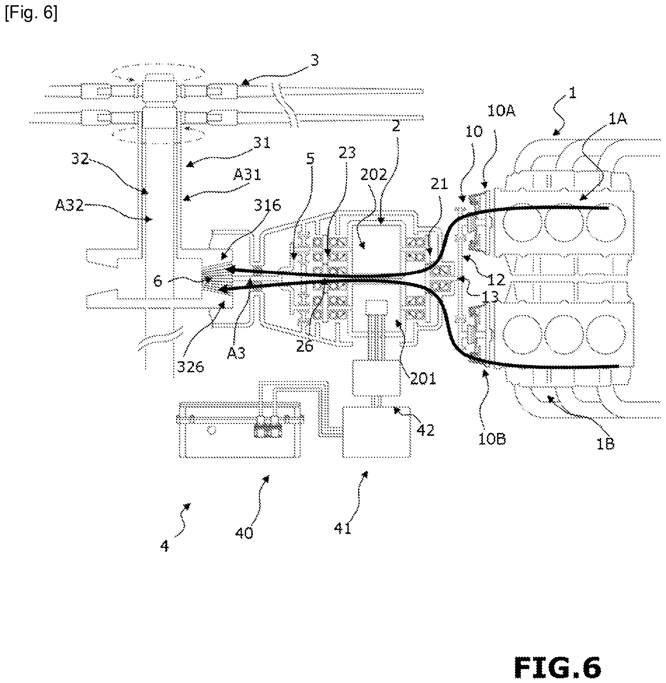

Selon une quatrième configuration de fonctionnement illustrée à la figure 6, l'unité de pilotage commande l'embrayage des deux moteurs thermiques 1A, 1B pour transmettre le mouvement de rotation de la motorisation thermique 1 au système de propulsion 3 à pales, mais sans consommation ou génération de courant électrique.

Le mouvement de rotation de la motorisation thermique 1 est transmis au système de propulsion 3 à pales en passant par la motorisation électriques 2, qui est alors passive. Autrement dit, la motorisation électrique 2 sert simplement de maillon mécanique dans la chaine de transmission de mouvement entre la motorisation thermique 1 et le système de propulsion 3. Ce mode de fonctionnement illustré à la figure 6 est particulièrement utile en cas de panne du système d'alimentation électrique.

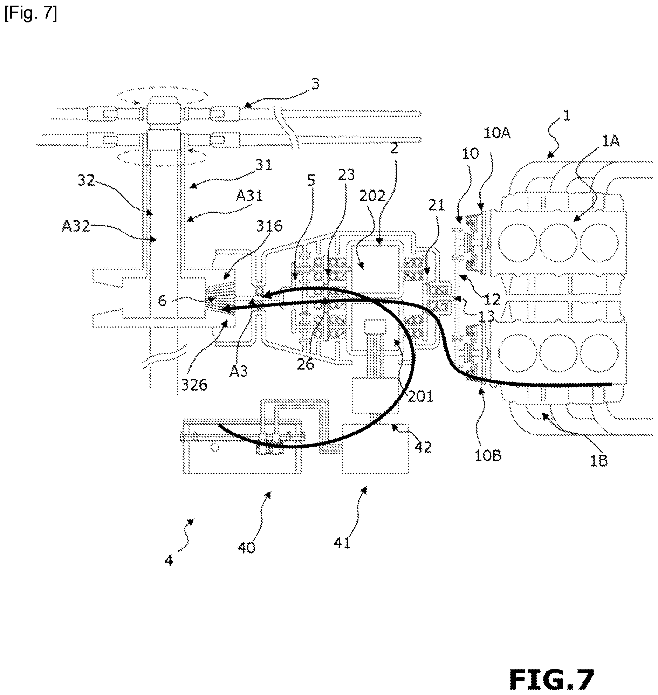

Selon une cinquième configuration de fonctionnement illustrée à la figure 7, l'unité de pilotage commande le débrayage de l'un 1A des deux moteurs thermiques 1A, 1B, par exemple en cas de défaut dudit moteur thermique 1A, l'autre moteur thermique 1B restant embrayé. Avantageusement, l'unité de pilotage pilote aussi le système d'alimentation 4 pour alimenter la motorisation électrique 2. Ainsi, le système de propulsion 3 à pales est entrainé à l'aide d'un des deux moteurs thermiques 1A, 1B et de préférence de la motorisation électrique 2.

Ce mode de fonctionnement illustré à la figure 7 est un mode de fonctionnement particulièrement utile en cas de panne d'un moteur thermique.

En cas de panne d'un des moteurs thermiques, il est ainsi possible de débrayer le moteur thermique en panne et de conserver la puissance du moteur thermique restant, par exemple 150 kW pour continuer de faire fonctionner le système de propulsion 3. Cette puissance du moteur thermique restant peut s'ajouter à la puissance du moteur électrique pour entraîner le système de propulsion 3, ce qui permet d'effectuer un atterrissage en sécurité de l'aéronef.

Ce mode de fonctionnement peut aussi être utilisé, par exemple dans une configuration de vol de croisière, pour réduire la consommation d'énergie.

De manière générale, chaque moteur thermique 1 peut être éteint ou peut tourner au ralenti en attendant d'être utilisé.

### Aspects particuliers

On peut prévoir que le système d'embrayages soit commandé pour passer d'une configuration à une autre par un dispositif de commande manuel ou automatique comprenant l'unité de pilotage. Le dispositif de commande peut comprendre une interface homme-machine connectée à l'unité de pilotage pour permettre aux pilotes de commander le passage d'une configuration à une autre du groupe motopropulseur. On peut aussi prévoir que le passage d'une configuration à une autre du groupe motopropulseur soit déclenché automatiquement par l'unité de pilotage lorsque des conditions prédéfinies sont remplies.

En particulier on peut prévoir que l'unité de pilotage, telle qu'un calculateur, permette de piloter un système d'actionnement des embrayages pour commander le passage d'une configuration à un autre. L'unité de pilotage peut se présenter sous la forme d'un processeur et d'une mémoire de données dans laquelle sont stockées des instructions informatiques exécutables par ledit processeur, ou encore sous la forme d'un microcontrôleur.

Autrement dit, les fonctions et étapes décrites peuvent être mise en œuvre à l'aide de programme informatique ou via des composants matériels (p. ex. des réseaux de portes programmables). En particulier, les fonctions et étapes opérées par l'unité de pilotage présentée ci-avant peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Engin (100), tel qu'un aéronef, muni d'un groupe motopropulseur, le groupe motopropulseur comprenant :
- un système de propulsion (3) à pales,
- une motorisation thermique (1), comprenant un premier moteur thermique (1A) et un deuxième moteur thermique (1B), configurée pour permettre d'entrainer le système de propulsion (3) à pales,
- une motorisation électrique (2) configurée pour permettre d'entrainer le système de propulsion (3) à pales,
- un système d'alimentation (4) électrique comprenant une batterie (40) permettant d'alimenter la motorisation électrique (2),
- un système d'embrayage (10) configuré pour permettre d'embrayer l'un quelconque ou chacun des moteurs thermiques (1A, 1B) pour entrainer le système de propulsion (3) à pales, le système d'embrayage (10) étant aussi configuré pour permettre de débrayer l'un quelconque ou chacun des moteurs thermiques (1A, 1B) par rapport au système de propulsion (3) à pales, la motorisation électrique (2) étant agencée en série avec la motorisation thermique (1), entre la motorisation thermique (1) et le système de propulsion à pales (30), **caractérisé en ce que** ledit engin comprend une unité de pilotage du système d'embrayage (10) de la motorisation thermique (1) et du système d'alimentation (4) de la motorisation électrique (2), l'unité de pilotage étant configurée pour permettre de débrayer l'un (1A) des deux moteurs thermiques (1A, 1B) en cas de défaut dudit moteur thermique (1A), l'autre moteur thermique (1B) restant embrayé, et de piloter le système d'alimentation (4) électrique afin d'alimenter la motorisation électrique (2) pour entraîner le système de propulsion (3) à pales à l'aide d'un des deux moteurs thermiques (1A, 1B) et de la motorisation électrique (2),
et **en ce que** l'unité de pilotage est configurée pour permettre de débrayer les deux moteurs thermiques (1A, 1B) et de piloter le système d'alimentation (4) électrique pour alimenter la motorisation électrique (2) afin d'entraîner le système de propulsion (3) à pales à l'aide uniquement de la motorisation électrique (2).

2. Engin (100) selon la revendication 1 , **caractérisé en ce que** ledit engin comprend une unité de pilotage du système d'embrayage (10) de la motorisation thermique (1) et du système d'alimentation (4) de la motorisation électrique (2), l'unité de pilotage étant configurée pour permettre d'embrayer les deux moteurs thermiques (1A, 1B) pour transmettre le mouvement de rotation de la motorisation thermique (1) au système de propulsion (3) à pales par l'intermédiaire de la motorisation électrique (2), sans consommation ou recharge de la batterie (40) électrique.

3. Engin (100) selon la revendication 1 ou 2, **caractérisé en ce que** le système de propulsion (3) à pales comprend deux rotors à pales (31, 32) qui comprennent chacun un arbre (A31, A32) rotatif vertical muni de pales, lesdits rotors (31, 32) étant configurés pour, à l'état entrainé en rotation, tourner en sens opposé l'un de l'autre.

4. Engin (100) selon l'une des revendications précédentes, **caractérisé en ce que**, ledit engin comprenant un arbre (13) de sortie de la motorisation thermique (1), le système d'embrayage (10) de la motorisation thermique (1) est interposé entre les arbres de sortie des moteurs thermiques (1A, 1B) et un système de transmission (12) de mouvement configuré pour transmettre le mouvement de rotation d'un ou de chacun desdits moteurs thermique audit arbre (13) de sortie de la motorisation thermique (1).

5. Engin (100) selon l'une des revendications précédentes, **caractérisé en ce que**, l'engin comprenant un arbre de sortie (26) de la motorisation électrique, le groupe motopropulseur comprend un système de transmission (23) disposé en sortie de la motorisation électrique (2) et configuré pour transmettre le mouvement de rotation de la motorisation électrique (2) audit arbre de sortie (26) de la motorisation électrique.

6. Engin (100) selon l'une des revendications précédentes, **caractérisé en ce que**, l'engin comprenant un arbre de sortie (26) de la motorisation électrique (2) et un arbre d'entrée (A3) du système de propulsion (3) à pales, le groupe motopropulseur comprend un système de réduction (5) de vitesse, de préférence un train épicycloïdal, entre ledit arbre de sortie (26) de la motorisation électrique (2) et ledit arbre d'entrée (A3) du système de propulsion (3) à pales.

7. Engin (100) selon l'une des revendications précédentes, **caractérisé en ce que** la motorisation électrique (2) présente plusieurs, de préférence trois, moteurs électriques (201, 202), répartis de préférence régulièrement autour d'un axe central.

8. Engin (100) selon la revendication 7, **caractérisé en ce que** chaque moteur électrique (201, 202) comprend un système de débrayage, par exemple par décrabotage, permettant, par exemple en cas de panne dudit moteur électrique, d'isoler mécaniquement ledit moteur électrique vis-à-vis du ou des autres moteurs électriques.

9. Engin (100) selon l'une des revendications précédentes, **caractérisé en ce que** ledit engin comprend une unité de pilotage du système d'embrayage (10) de la motorisation thermique (1) et du système d'alimentation (4) de la motorisation électrique (2), l'unité de pilotage étant configurée pour permettre d'embrayer les deux moteurs thermiques (1A, 1B) et d'alimenter la motorisation électrique (2) pour entraîner le système de propulsion (3) à pales à l'aide de la combinaison des deux moteurs thermiques (1A, 1B) et de la motorisation électrique (2).

10. Engin (100) selon l'une des revendications précédentes, **caractérisé en ce que** ledit engin comprend une unité de pilotage du système d'embrayage (10) de la motorisation thermique (1) et du système d'alimentation (4) de la motorisation électrique (2), l'unité de pilotage étant configurée pour permettre d'embrayer les deux moteurs thermiques (1A, 1B) pour entraîner la motorisation électrique (2), de manière à, d'une part, transmettre, par l'intermédiaire de la motorisation électrique (2), le mouvement de rotation de la motorisation thermique (1) au système de propulsion (3) à pales, tout en rechargeant la batterie (40) du système d'alimentation (4) électrique.

11. Engin (100) selon l'une des revendications précédentes, **caractérisé en ce que** ledit engin comprend un carter dans lequel est logée la motorisation électrique (2) et dans lequel sont ménagées des ouvertures et/ou cavités permettant de refroidir la motorisation électrique (2), ledit groupe motopropulseur comprenant de préférence un système de refroidissement à eau pour le refroidissement des moteurs thermiques (1A, 1B).

12. Procédé de pilotage d'un engin (100) conforme à l'une des revendications précédentes, **caractérisé en ce que**, le procédé comprend le débrayage ou l'embrayage de l'un ou chacun des moteurs thermiques (1A, 1B) par rapport au système de propulsion (3) à pales, et/ou le pilotage du système d'alimentation (4) de la motorisation électrique pour alimenter la motorisation électrique (2) ou recharger la batterie (41).

## Patentansprüche

1. Maschine (100), wie beispielsweise ein Luftfahrzeug, das mit einem Antriebsaggregat versehen ist, das Antriebsaggregat umfassend:
- ein Schaufelradantriebssystem (3),
- einen Verbrennungsmotor (1), umfassend einen ersten Verbrennungsmotor (1A) und einen zweiten Verbrennungsmotor (1B), die konfiguriert sind, um den Antrieb des Schaufelradantriebssystems (3) zu ermöglichen,
- einen Elektromotorantrieb (2), der konfiguriert ist, um einen Antrieb des Schaufelradantriebssystems (3) zu ermöglichen,
- ein Stromversorgungssystem (4), umfassend eine Batterie (40), die es ermöglicht, den Elektromotorantrieb (2) zu versorgen;
- ein Kupplungssystem (10), das konfiguriert ist, um ein Einkuppeln des einen oder jedes der Verbrennungsmotoren (1A, 1B) zum Antreiben des Schaufelradantriebssystems (3) zu ermöglichen, wobei das Kupplungssystem (10) auch konfiguriert ist, um ein Auskuppeln des einen oder jedes der Verbrennungsmotoren (1A, 1B) in Bezug auf das Schaufelradantriebssystem (3) zu ermöglichen, wobei der Elektromotorantrieb (2) in Reihe mit dem Verbrennungsmotorantrieb (1) zwischen dem Verbrennungsmotorantrieb (1) und dem Schaufelradsystem (30) angeordnet ist, **dadurch gekennzeichnet, dass** die Maschine eine Steuereinheit des Kupplungssystems (10) des Verbrennungsmotorantriebs (1) und das Stromversorgungssystem (4) des Elektromotorantriebs (2) umfasst, wobei die Steuereinheit konfiguriert ist, um ein Auskuppeln eines (1A) der zwei Verbrennungsmotoren (1A, 1B) im Fall eines Defekts des Verbrennungsmotors (1A) zu steuern, wobei der andere Verbrennungsmotor (1B) eingekuppelt bleibt, und das Stromversorgungssystem (4) zu steuern, um den Elektromotorantrieb (2) zu versorgen, um das Schaufelradantriebssystem (3) mittels eines der zwei Verbrennungsmotoren (1A, 1B) und des Elektromotorantriebs (2) anzutreiben,
und dass die Steuereinheit konfiguriert ist, um zu ermöglichen, die zwei Verbrennungsmotoren (1A, 1B) auszukuppeln und das Stromversorgungssystem (4) zu steuern, um den Elektromotorantrieb (2) zu versorgen, um das Schaufelradantriebssystem (3) nur mittels des Elektromotorantriebs (2) anzutreiben.

2. Maschine (100) nach Anspruch 1, **dadurch gekennzeichnet, dass** die Maschine eine Steuereinheit des Kupplungssystems (10) des Verbrennungsmotors (1) und das Stromversorgungssystem (4) des Elektromotorantriebs (2) umfasst, wobei die Steuereinheit konfiguriert ist, um ein Einkuppeln der zwei Verbrennungsmotoren (1A, 1B) zu ermöglichen, um die Drehbewegung des Verbrennungsmotorantriebs (1) über den Elektromotorantrieb (2) auf das Schaufelradantriebssystem (3) zu übertragen, ohne dass die elektrische Batterie (40) verbraucht oder aufgeladen wird.

3. Maschine (100) nach Anspruch 1 oder 2, **dadurch gekennzeichnet, dass** das Schaufelradantriebssystem (3) zwei Schaufelradrotoren (31, 32) umfasst, die jeweils eine vertikale drehbare Welle (A31, A32) umfassen, die mit Schaufeln versehen ist, wobei die Rotoren (31, 32) konfiguriert sind, um in drehangetriebenem Zustand in entgegengesetzter Richtung zueinander zu drehen.

4. Maschine (100) nach einem der vorherigen Ansprüche, **dadurch gekennzeichnet, dass**, da die Maschine eine Abtriebswelle (13) des Verbrennungsmotorantriebs (1) umfasst, das Kupplungssystem (10) des Verbrennungsmotorantriebs (1) zwischen den Abtriebswellen der Verbrennungsmotoren (1A, 1B) und einem Bewegungsübertragungssystem (12) angeordnet ist, das konfiguriert ist, um die Drehbewegung von einem oder jedem der Verbrennungsmotoren auf die Abtriebswelle (13) des Verbrennungsmotorantriebs (1) zu übertragen.

5. Maschine (100) nach einem der vorherigen Ansprüche, **dadurch gekennzeichnet, dass**, da die Maschine eine Abtriebswelle (26) des Elektromotorantriebs umfasst, das Antriebsaggregat ein Übertragungssystem (23) umfasst, das an dem Ausgang des Elektromotorantriebs (2) angeordnet und konfiguriert ist, um die Drehbewegung des Elektromotorantriebs (2) auf die Abtriebswelle (26) des Elektromotorantriebs zu übertragen.

6. Maschine (100) nach einem der vorherigen Ansprüche, **dadurch gekennzeichnet, dass** die Maschine eine Abtriebswelle (26) des Elektromotorantriebs (2) und eine Eingangswelle (A3) des Schaufelradantriebssystems (3) umfasst, das Antriebsaggregat ein Untersetzungssystem (5), vorzugsweise ein Planetengetriebe, zwischen der Abtriebswelle (26) des Elektromotorantriebs (2) und der Eingangswelle (A3) des Schaufelradantriebssystems (3) umfasst.

7. Maschine (100) nach einem der vorherigen Ansprüche, **dadurch gekennzeichnet, dass** der Elektromotorantrieb (2) mehrere, vorzugsweise drei, Elektromotoren (201, 202) aufweist, die vorzugsweise gleichförmig um eine Mittelachse verteilt sind.

8. Maschine (100) nach Anspruch 7, **dadurch gekennzeichnet, dass** jeder Elektromotor (201, 202) ein Auskupplungssystem, beispielsweise durch Ausrücken, umfasst, das es beispielsweise im Fall eines Ausfalls des Elektromotors ermöglicht, den Elektromotor gegenüber dem oder den anderen Elektromotoren mechanisch zu isolieren.

9. Maschine (100) nach einem der vorherigen Ansprüche, **dadurch gekennzeichnet, dass** die Maschine eine Steuereinheit des Kupplungssystems (10) des Verbrennungsmotorantriebs (1) und das Stromversorgungssystem (4) des Elektromotorantriebs (2) umfasst, wobei die Steuereinheit konfiguriert ist, um ein Einkuppeln der zwei Verbrennungsmotoren (1A, 1B) und eine Versorgung des Elektromotorantriebs (2) zu ermöglichen, um das Schaufelradantriebssystem (3) mittels der Kombination aus den zwei Verbrennungsmotoren (1A, 1B) und dem Elektromotorantrieb (2) anzutreiben.

10. Maschine (100) nach einem der vorherigen Ansprüche, **dadurch gekennzeichnet, dass** die Maschine eine Steuereinheit des Kupplungssystems (10) des Verbrennungsmotorantriebs (1) und des Stromversorgungssystems (4) des Elektromotorantriebs (2) umfasst, wobei die Steuereinheit konfiguriert ist, um ein Einkuppeln der zwei Verbrennungsmotoren (1A, 1B) zum Antreiben des Elektromotorantriebs (2) zu aktivieren, um einerseits über den Elektromotorantrieb (2) die Drehbewegung des Verbrennungsmotorantriebs (1) auf das Schaufelradantriebssystem (3) zu übertragen, während gleichzeitig die Batterie (40) des Stromversorgungssystems (4) aufgeladen wird.

11. Maschine (100) nach einem der vorherigen Ansprüche, **dadurch gekennzeichnet, dass** die Maschine ein Gehäuse umfasst, in dem der Elektromotorantrieb (2) untergebracht ist und in dem Öffnungen und/oder Hohlräume zum Kühlen des Elektromotorantriebs (2) bereitgestellt sind, das Antriebsaggregat umfassend vorzugsweise ein Wasserkühlsystem zum Kühlen der Verbrennungsmotoren (1A, 1B).

12. Verfahren zum Steuern einer Maschine (100) nach einem der vorherigen Ansprüche, **dadurch gekennzeichnet, dass** das Verfahren das Auskuppeln oder das Einkuppeln des einen oder jedes der Verbrennungsmotoren (1A, 1B) in Bezug auf das Schaufelradantriebssystem (3) und/oder das Steuern des Stromversorgungssystems (4) des Elektromotorantriebs umfasst, um den Elektromotorantrieb (2) zu versorgen oder die Batterie (41) aufzuladen.

## Claims

1. A machine (100), such as an aircraft, provided with a powertrain, the powertrain comprising:
- a bladed propulsion system (3),
- a thermal drive system (1), comprising a first thermal engine (1A) and a second thermal engine (1B), configured to make it possible to drive the bladed propulsion system (3),
- an electric drive system (2) configured to make it possible to drive the bladed propulsion system (3),
- an electric power supply system (4) comprising a battery (40) making it possible to supply the electric drive system (2) with power,
- a clutch system (10) configured to make it possible to engage any one or each of the thermal engines (1A, 1B) to drive the bladed propulsion system (3), the clutch system (10) also being configured to make it possible to disengage any one or each of the thermal engines (1A, 1B) with respect to the bladed propulsion system (3), the electric drive system (2) being arranged in series with the thermal drive system (1), between the thermal drive system (1) and the bladed propulsion system (3),
**characterized in that** said machine comprises a control unit for controlling the clutch system (10) of the thermal drive system (1) and the power supply system (4) of the electric drive system (2), the control unit being configured to make it possible to disengage one (1A) of the two thermal engines (1A, 1B), in the case of a fault of said thermal engine (1A), the other thermal engine (1B) remaining engaged, and to control the electric power supply system (4) in order to supply the electric drive system (2) with power to drive the bladed propulsion system (3) by means of one of the two thermal engines (1A, 1B) and the electric drive system (2),
and **in that** said the control unit is configured to make it possible to disengage the two thermal engines (1A, 1B) and to control the electric power supply system (4) to supply the electric drive system (2) with power in order to drive the bladed propulsion system (3) by means of only the electric drive system (2).

2. The machine (100) as claimed in claim 1, **characterized in that** said machine comprises a control unit for controlling the clutch system (10) of the thermal drive system (1) and the power supply system (4) of the electric drive system (2), the control unit being configured to make it possible to engage the two thermal engines (1A, 1B) to transmit the rotational movement from the thermal drive system (1) to the bladed propulsion system (3) via the electric drive system (2), without consuming or recharging the electric battery (40).

3. The machine (100) as claimed in claim 1 or 2, **characterized in that** the bladed propulsion system (3) comprises two bladed rotors (31, 32) which each comprise a vertical rotary shaft (A31, A32) provided with blades, said rotors (31, 32) being configured, in the rotationally driven state, to rotate in mutually opposite directions.

4. The machine (100) as claimed in one of the preceding claims, **characterized in that**, with said machine comprising an output shaft (13) of the thermal drive system (1), the clutch system (10) of the thermal drive system (1) is interposed between the output shafts of the thermal engines (1A, 1B) and a movement transmission system (12) configured to transmit the rotational movement from one or from each of said thermal engines to said output shaft (13) of the thermal drive system (1).

5. The machine (100) as claimed in one of the preceding claims, **characterized in that**, with the machine comprising an output shaft (26) of the electric drive system, the powertrain comprises a transmission system (23) arranged at the output of the electric drive system (2) and configured to transmit the rotational movement from the electric drive system (2) to said output shaft (26) of the electric drive system.

6. The machine (100) as claimed in one of the preceding claims, **characterized in that**, with the machine comprising an output shaft (26) of the electric drive system (2) and an input shaft (A3) of the bladed propulsion system (3), the powertrain comprises a speed reduction system (5), preferably an epicyclic gear train, between said output shaft (26) of the electric drive system (2) and said input shaft (A3) of the bladed propulsion system (3).

7. The machine (100) as claimed in one of the preceding claims, **characterized in that** the electric drive system (2) has a plurality of, preferably three, electric motors (201, 202), which are preferably distributed uniformly about a central axis.

8. The machine (100) as claimed in claim 7, **characterized in that** each electric motor (201, 202) comprises a declutching system, for example a dog-declutching system, making it possible, for example in the case of failure of said electric motor, to mechanically isolate said electric motor from the other electric motor(s).

9. The machine (100) as claimed in one of the preceding claims, **characterized in that** said machine comprises a control unit for controlling the clutch system (10) of the thermal drive system (1) and the power supply system (4) of the electric drive system (2), the control unit being configured to make it possible to engage the two thermal engines (1A, 1B) and to supply the electric drive system (2) with power to drive the bladed propulsion system (3) by means of the combination of the two thermal engines (1A, 1B) and the electric drive system (2).

10. The machine (100) as claimed in one of the preceding claims, **characterized in that** said machine comprises a control unit for controlling the clutch system (10) of the thermal drive system (1) and the power supply system (4) of the electric drive system (2), the control unit being configured to make it possible to engage the two thermal engines (1A, 1B) to drive the electric drive system (2), so as, on the one hand, to transmit, via the electric drive system (2), the rotational movement from the thermal drive system (1) to the bladed propulsion system (3), while recharging the battery (40) of the electric power supply system (4).

11. The machine (100) as claimed in one of the preceding claims, **characterized in that** said machine comprises a casing in which the electric drive system (2) is housed and in which there are formed openings and/or cavities making it possible to cool the electric drive system (2), said powertrain preferably comprising a water cooling system for cooling the thermal engines (1A, 1B).

12. A method for controlling a machine (100) as claimed in one of the preceding claims, **characterized in that** the method comprises the engagement or the disengagement of one or each of the thermal engines (1A, 1B) with respect to the bladed propulsion system (3), and/or the control of the power supply system (4) of the electric drive system to supply the electric drive system (2) with power or to recharge the battery (41).
